# EUROPEAN PATENT SPECIFICATION

(11) **EP 0 714 208 B1**
(45) Date of publication and mention of the grant of the patent: **13.02.2002**
(21) Application number: 95203137.5
(22) Date of filing: 16.11.1995
(51) Int. Cl.: H04N 7/24, H04N 7/50

(54) **Method and system for decoding coded video signals**
Verfahren und Vorrichtung zur Dekodierung von kodierten Videosignalen
Procédé et système pour le décodage de signaux vidéo codés

(30) Priority: 25.11.1994 EP 94402708
(43) Date of publication of application: 29.05.1996
(73) Proprietor: Koninklijke Philips Electronics N.V., 5621 BA Eindhoven (NL)
(72) Inventor: Frencken, Peter, F-75008 Paris (FR)
(74) Representative: Landousy, Christian

(56) References cited:
- W. FLETCHER, P. ARDRON: "application of MPEG-2 in thr receiver" THE INSTITUTE OF ELECTRICAL ENGINEERS, 1995, XP000749769

## Description

The invention relates to a method of decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said method comprising, in series, a step of decoding said coded video signals, a step of storing signals thus decoded and a step of displaying said signals at the field frequency.

The invention also relates to a decoding system for performing the method according to the invention and to a video reception equipment including such a decoding system. This invention is used in the field of digital television, both in current definition and in high definition, and notably where the television signals are compatible with the MPEG standard whose characteristic features will be described hereinafter.

In the last few years the International Standardization Organisation ISO has developed different algorithms for compressing digital data, and notably the MPEG standard (named after the group of experts who worked out this standard: Moving Picture Experts Group). This algorithm is based on two basic techniques: a transform of the signals to be compressed, with which the spatial redundancy within one picture can be reduced, and a compensation of motion between pictures, with which the temporal redundancy between these pictures can be reduced.

Motion compensation is a technique combining pictures which have already been coded with data which are representative of motions within successive pictures. As the pictures are subdivided into blocks, the coder searches data in a preceding picture, which data represent the best possible approximation of those data during coding, and then expresses the spatial shift between these data with the aid of a vector which is representative of this shift, i.e. of the motion between this preceding picture and the current picture. The block of data thus selected is used as a prediction of the block of current data. The coding is based on the residual prediction error computed by means of the difference between this previous selected block and the current block. Upon decoding, the inverse process is used to restore the initial pictures. In the MPEG standard, the motion compensation is effected per macroblock consisting of 16 x 16 pixels, more precisely of four luminance blocks of 8 x 8 pixels completed by two chrominance blocks of also 8 x 8 pixels.

Three types of pictures are defined: the pictures of the type I, referred to as "intra", which are coded without reference to any other previous picture (and thus provide random access to the sequence of coded pictures), the pictures of the type P, predicted by motion compensation based on a previous picture of the type I or of the type P, and the pictures of the type B, which are predicted (or interpolated) by means of bidirectional motion compensation (i.e. based on a previous picture and a subsequent picture, either one being of the type I or P). To permit this interpolation or bidirectional prediction, the pictures are transmitted in an order which is different from that in which they are subsequently displayed, so that said previous and subsequent pictures should both be available in order that the interpolation can be performed.

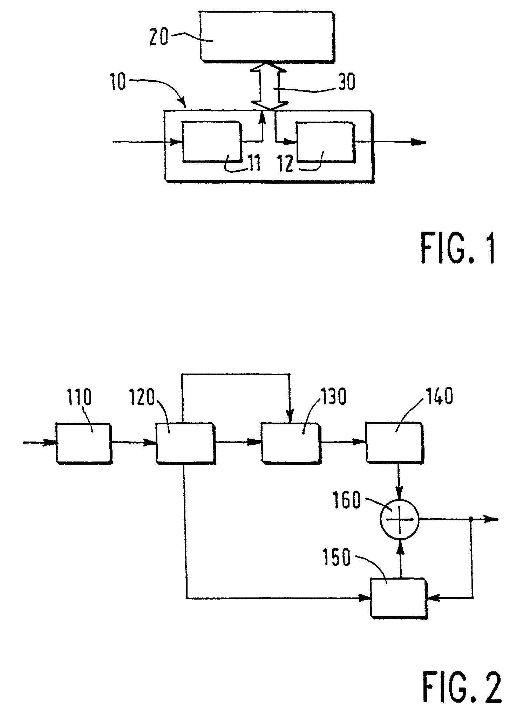

United States Patent 5,294,974 shows (in Fig. 1) the diagrammatic structure of a coder which is suitable for supplying a stream of digital data whose syntax is in conformity with the MPEG standard. In this coder, the luminance and chrominance signals obtained after shifting the original pictures are converted into blocks (after this format conversion, each picture of the sequence is henceforth represented by a sequence of blocks of 8 x 8 pixels, each pixel itself being represented by a digital word of 8 bits, while the blocks are regrouped in macroblocks as described hereinbefore). A motion estimation between each current macroblock and a predicted macroblock by searching the similar macroblock within a preceding reference picture subsequently provides the possibility of defining the coding mode per macroblock. Each macroblock of I pictures is coded in accordance with the "intra" mode. For the pictures of type P, the coding mode is either the unidirectional prediction mode, or the "intra" mode for certain macroblocks. For the pictures of the type B, the coding mode is the bidirectional prediction mode, but also the unidirectional prediction mode (beforehand or afterwards) or even the "intra" mode for certain macroblocks. For modes other than the "intra" mode, the predicted macroblock is subtracted from the current macroblock and only the residual macroblock is coded.

The "intra" macroblocks or the residual macroblocks (dependent on the mode) are then after transform of the spatial domain into the frequency domain (by way of, for example a discrete cosine transform of blocks, denoted DCT) and quantization, coded in a variable-length coding circuit. The signals thus coded are stored for constituting the stream of coded data and dequantized and then transformed by way of the inverse orthogonal transform of the preceding one for constructing the predicted macroblock with which the current macroblock is compared in the modes other than the "intra" mode.

The syntax of the stream of coded data as well as the method of decoding this stream of data in conformity with said standard (but not the coding method which is only compatible with this syntax and this decoding method) are described in various documents edited by the International Standardization Organisation, and notably in its periodically edited recommendations. Moreover a decoder which is suitable for decoding a stream of MPEG data is shown in the document ISCAS 94, London, May 1994, chapter 3.22, "VLSI implementation of MPEG decoders".

The general structure of the decoder described in the latter document is described with reference to Fig. 1. The coded signals, which have been transmitted and/or stored, are received by a decoding sub-assembly 10 whose output signals are the pixels to be displayed. This decoding sub-assembly 10 is connected to a storage sub-assembly 20 via a bus 30. The decoding sub-assembly 10 comprises a decoding device 11 and a display device 12. The decoded signals supplied by the decoding device 11 are stored in the storage sub-assembly 20 in the form of macroblocks of 16 x 16 pixels having the CCIR format 601 4:2:0. The macroblocks thus stored are subsequently applied to the display device 12 which ensures their conversion so as to adapt them to the output format required, viz. the interlaced mode 4:2:2 (an interlaced picture is composed of two odd and even fields temporally shifted by half a picture and spatially by one line, the odd field regrouping the odd lines and being displayed first, and the even field regrouping the even lines).

Fig. 2 illustrates the operation of the decoding device, characteristic of the MPEG standard. The coded signals constituting the stream of MPEG data are first stored in a buffer memory 110. All the sequence and group headers of the pictures are read in this memory. Subsequently, the start of each coded picture and the type of this picture are identified and the successive decoding of each macroblock is effected in a variable-length decoding circuit 120. Each block (or macroblock) of decoded data is then submitted to inverse quantization (per macroblock) and inverse transform from the frequency domain to the spatial domain (here, in inverse quantization and inverse discrete cosine transform circuits 130 and 140). A motion compensation circuit 150 receives the motion vectors and the signals indicating the type of each macroblock (intra or residual, dependent on the coding mode), and then supplies the predicted macroblocks which are added to the decoded signals in an adder 160 (for the modes other than the "intra" mode) whose output supplies the reconstituted signals to be displayed for reconstructing the pictures. If these pictures are of the type I or P, they are also stored in so far as they are reference pictures which are indispensable for reconstituting the pictures of type B. Before display, the natural order of these pictures I, P, B is restored.

In the 625 lines/50 Hz transmission systems, the majority of MPEG decoders use an external memory of approximately 16 Mbits (1 megabit = 2²⁰ bits) whose capacity for picture sizes of 720 x 576 pixels is divided as follows:
(a) input buffer memory 110: approximately 2.5 Mbits (in accordance with the MPEG specifications a capacity of 1.85 Mbit would be sufficient for this memory, but in practice a capacity supplement of approximately 600 kbits proves to be necessary);
(b) memories for storing previous and subsequent reference pictures (as explained, these two pictures are necessary for the bidirectional interpolation of the macroblocks of the type-B pictures, and the required memory capacity is 720 x 576 x 8 x 1.5 = 5 Mbits per picture, i.e. 10 Mbits);
(c) memory for each type-B picture: approximately 3.8 Mbits.

The minimum capacity thus reached is 16.3 Mbits, which for an external memory size of 16.8 Mbits (2²⁴ = 16.8.10⁶) leaves only 500 kbits available for other uses.

This restriction is accompanied by that relating to the bandwidth for the memory access, which is concisely referred to as rate or memory bandwidth in the following description and which is representative of the rate of communication between the decoding sub-assembly 10 and the storage sub-assembly 20. The value of the useful memory bandwidth is not constant from one macroblock to the other : the macroblocks coded in accordance with the "intra" mode employ lower values, whereas those predicted by means of bidirectional interpolation with motion vectors determined to half a pixel require higher values. This rate of communication between the sub-assemblies 10 and 20 may vary in a range between approximately 400 to 700 Mbits/second. As has also been explained, the external memory used for the storage sub-assembly 20 is a memory of 16 Mbits (here a synchronous dynamic random access memory SDRAM), operating at 54 MHz, at which the memory bandwidth is 864 Mbits/second which is just above the range stated hereinbefore.

Thus it appears that the memory capacity and the memory bandwidth are substantially completely used when the method of decoding the video signals here processed is being performed. It is therefore practically impossible to carry out supplementary operations while this method is being performed. Whereas in the near future the increasing integration of functions would permit such operations as, for example teletext, graphic processing, on-screen display, etc., these limitations inhibit their use in practice.

It is a first object of the invention to provide a method of decoding coded signals which are compatible with the MPEG standard and evade these limitations, thus providing the possibility of carrying out supplementary operations such as those mentioned.

To this end, the invention relates to a coding method as described in the opening paragraph, which is characterized in that for the signals relating to the luminance of each macroblock of type B, said decoding and display steps are subdivided into two sub-steps of decoding signals corresponding to each field and into two sub-steps of displaying said fields, and in that each sub-step of decoding a field immediately precedes each sub-step of displaying said field and, with a view to on-the-fly-decoding of said type-B macroblocks, is effected at the same rate as said sub-step of displaying said field without any buffer storage during said storage step.

With the method thus proposed, the luminance information components of the type-B macroblocks are only decoded at the instant when they must be available for display, which renders it unnecessary to store them and thus realises an economy of space in the memory.

In a modification of the on-the-fly decoding method thus proposed, this method is characterized in that for the signals relating to the luminance of each macroblock of type B, the decoding step is subdivided into two decoding sub-steps, a first sub-step for decoding, at the frame frequency, said definition signals associated with said macroblocks, and a second sub-step for decoding said useful signals of said macroblocks at the field frequency, said second decoding sub-step immediately preceding the step of displaying macroblocks of type B and, with a view to on-the-fly-decoding of said type-B macroblocks, being effected at the same rate as said step of displaying macroblocks of type B, without any buffer storage of said useful signals during said storage step.

While in the first proposed implementation, the decoding operation may be realised at a raised frequency because it would be realised twice in succession for each macroblock, the modified solution, which consists of dividing this decoding operation into two successive operations, the first of which concerns the signals for defining the macroblocks and is carried out at a nominal rate, and the second of which concerns only the useful signals and is carried out at a higher rate which is equal to the display rate in order that the decoded signals can immediately be displayed without any buffer storage, provides considerable improvements. Since the first decoding sub-step only concerns the signals for defining the macroblocks, it is much simpler than the decoding method carried out in an MPEG decoder of the conventional structure. Moreover, the fact that, at the expense of using a small auxiliary memory zone, said definition signals have been previously decoded and stored and, particularly since the lengths of the headers and the macroblocks are known before the second decoding sub-step is carried out, the useful signals can be decoded at a considerably accelerated rate by way of a parallel execution. The solution which is particularly proposed consists of subdividing the second decoding sub-step into two parallel operations of variable-length decoding each line of macroblocks to ensure parallel decoding of one half of each macroblock line. Another solution is the possibility that due to the length parameter a variable-length decoding operation at 1,5 x the nominal speed is used, only higher frequency coefficients being skipped in worst case coded B pictures.

Another modification of this method is characterized in that the second decoding sub-step is subdivided into two parallel operations of variable-length decoding each macroblock line to ensure parallel decoding of one half of each macroblock line. This parallelization of the second sub-step provides the possibility of accelerating the decoding process.

The decoding method may also be improved in that decoding-on-the-fly according to the invention relates to both chrominance and luminance information components. The memory bandwidth economy is thus further increased.

In all the cases, the decoding and display steps or sub-steps of the proposed method are particularly adapted to process MPEG coded video signals.

Complementary improvements each realising a new economy of the memory passband are the conversion of the format of the macroblocks into the video display format during the decoding method itself and without the use of the external memory, or also in that the blocks of coefficients obtained from the transform of the signals to be decoded from the spatial domain to the frequency domain are not decoded in the order of transmission, after this conversion, but in the order in which the lines to be subsequently displayed are transmitted per field.

It is another object of the invention to propose a decoding system which is suitable for performing the decoding method according to the invention in any one of the modifications described hereinbefore.

To this end, the invention particularly relates to a system for decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said system comprising a decoding sub-assembly connected to a sub-assembly for storing signals thus decoded via a bus and consisting of a decoding device and a device for displaying said signals at the field frequency, characterized in that for decoding and displaying the signals relating to the luminance and possibly to the chrominance of each macroblock of type B, said system comprises means for subdividing said two operations into two sub-steps of decoding signals corresponding to each field and into two sub-steps of displaying said fields, each sub-step of decoding a field being performed immediately before the corresponding sub-step of displaying said field and, with a view to on-the-fly-decoding of said type-B macroblocks, at the same rate as said sub-step of displaying said field, without any buffer storage.

In accordance with another important embodiment, the invention also relates to a system for decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said system comprising a decoding sub-assembly connected to a sub-assembly for storing signals thus decoded via a bus and consisting of a device for decoding and a device for displaying said signals at the field frequency, characterized in that for decoding and displaying the signals relating to the luminance and possibly to the chrominance of each macroblock of type B, said system comprises means for subdividing the decoding operation into two decoding sub-steps, a first sub-step for decoding, at the frame frequency, said definition signals associated with said macroblocks, and a second sub-step for decoding said useful signals of said macroblocks at the field frequency, said second decoding sub-step immediately preceding the step of displaying macroblocks of type B and, with a view to on-the-fly-decoding of said type-B macroblocks, being effected at the same rate as said step of displaying macroblocks of type B, without any buffer storage of said useful signals.

In the latter embodiment, it is possible to use a modification in accordance with which said sub-dividing means are provided for subdividing the second decoding sub-step into two variable-length decoding operations ensuring parallel decoding of one half of each macroblock line.

It is finally a third object of the invention to propose a video reception equipment including a decoding system as defined above and which is provided for processing MPEG coded video signals.

These and other aspects of the invention will be apparent from and elucidated with reference to the embodiments described hereinafter.

In the drawings:
Fig. 1 shows the general structure of an MPEG decoder of the conventional type;
Fig. 2 illustrates the operation of an MPEG decoder of the conventional type;
Figs. 3 to 9 show, per picture and for a known decoder similar to that shown in Fig. 2:
   - the input pictures of the decoder (Fig.3);
   - the evolution of the contents of the input memory of this decoder (Fig. 4);
   - the decoded pictures (Fig. 5);
   - the pictures of the type I or P stored in two reference memories with a view to rendering the interpolation of the pictures of type B possible (Figs. 6 and 7);
   - the pictures in the display memory (Fig. 8);
   - the restored and displayed pictures (Fig. 9);

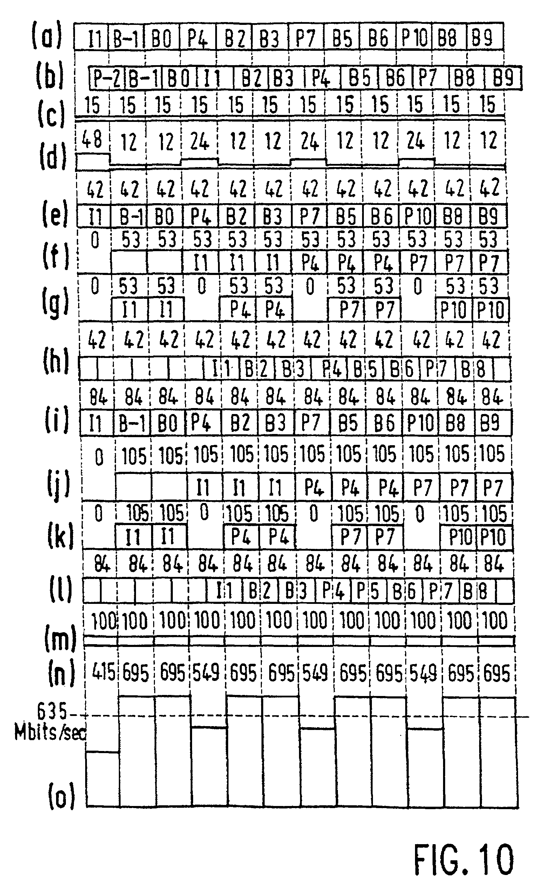

Fig. 10 indicates for this known decoder the limitations of the memory bandwidth in the most unfavourable situation;

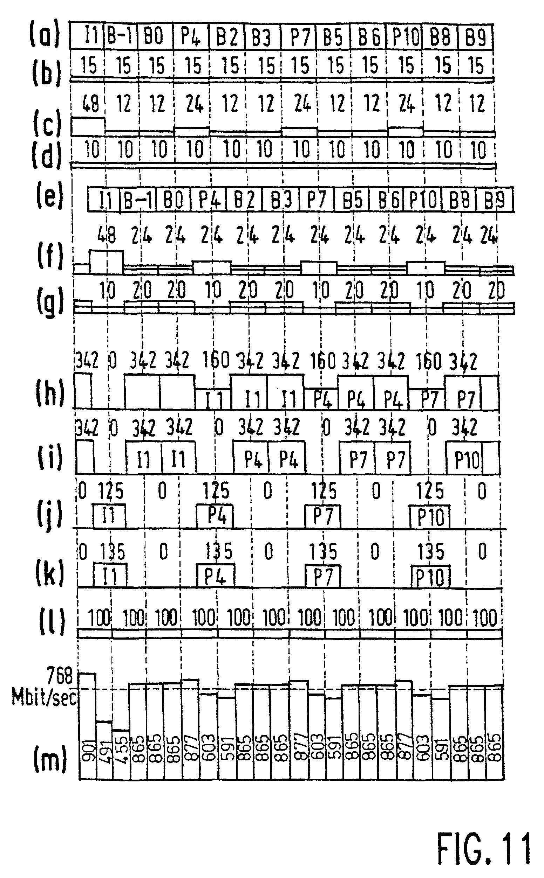

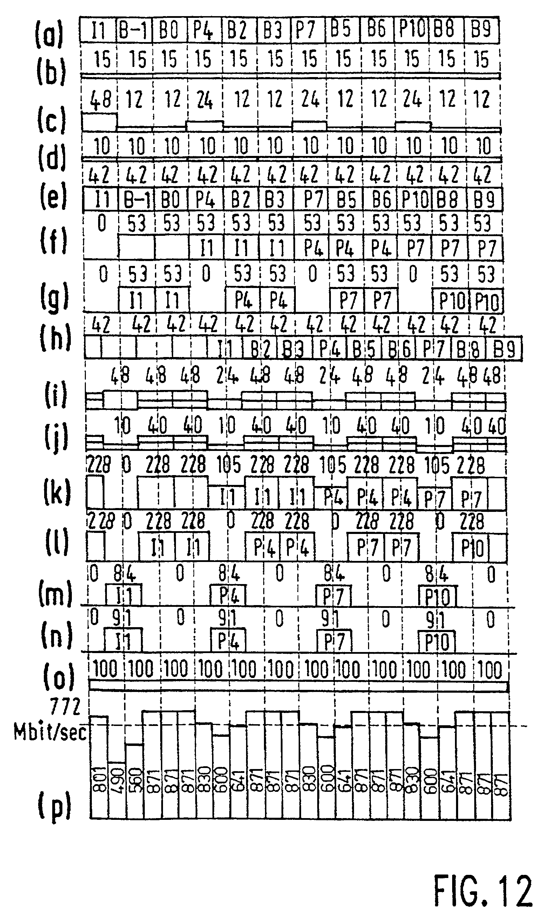

Figs. 11 and 12 indicate, in two distinct examples of the coding method according to the invention (but always in the situation which would be the most unfavourable) the new limitations of the bandwidth which are more favourable than in the case of the known decoder;

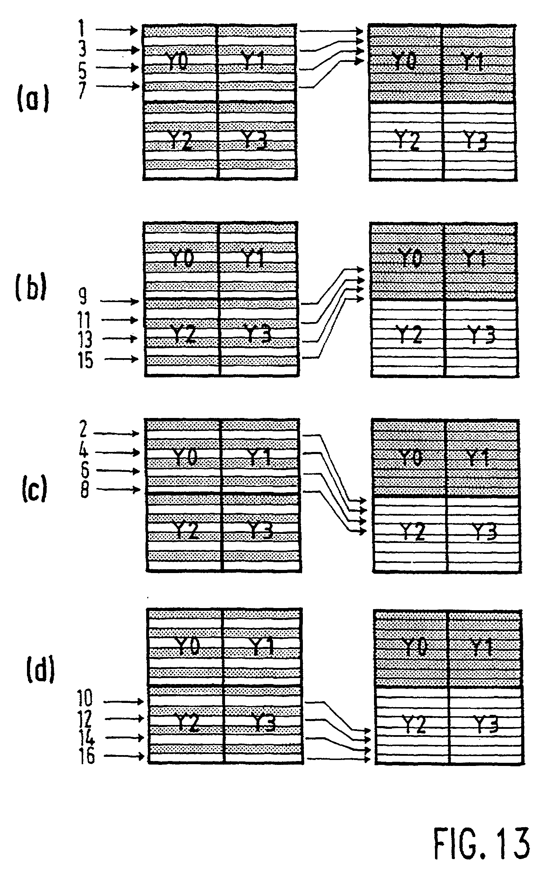

Fig. 13 shows the structure of the lines of four luminance blocks of a macroblock and illustrates the principle of the format conversion which is necessary before displaying the decoded signals;

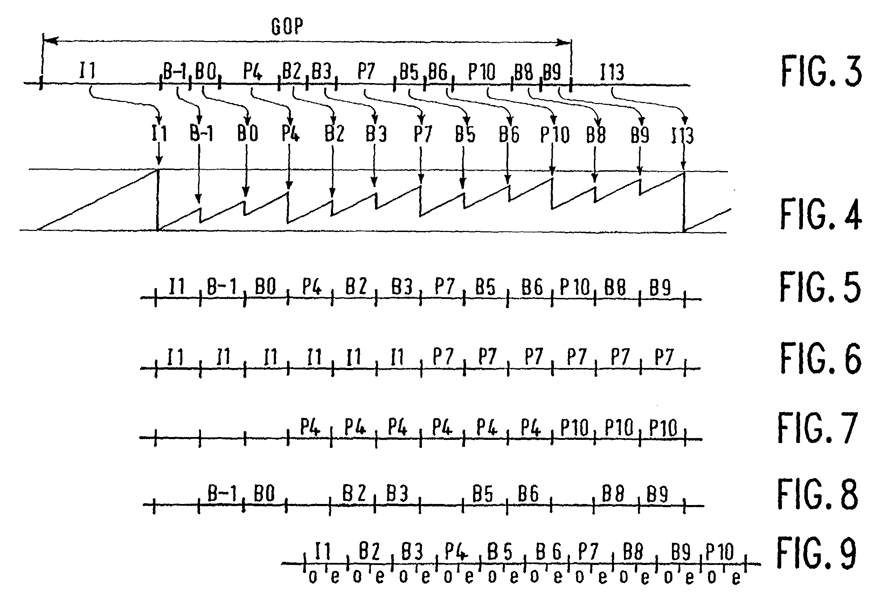

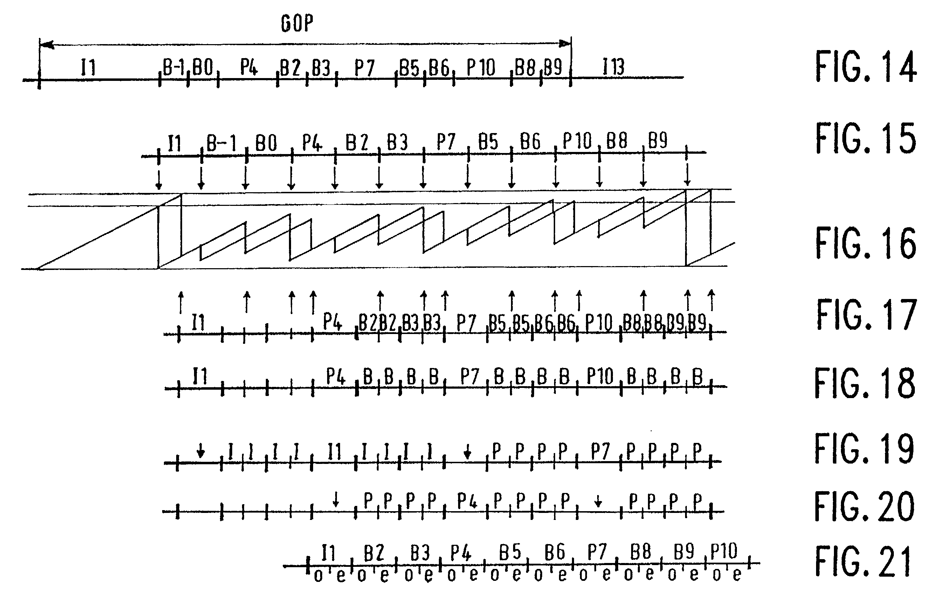

Figs. 14 to 21 show, with respect to Figs. 3 to 9, new diagrams corresponding to one of the implementations of the method according to the invention.

Before the method according to the invention is described, several aspects of operation of the decoder shown in Fig. 2 will be described with reference to Figs. 3 to 10.

Fig. 3 shows, per picture of the type I, P or B and for a group of 12 pictures (denoted GOP, Group Of Pictures, in the Figure) the stream of coded data which is present at the input of said decoder. While the natural order of the pictures (the order which would initially exist before any coding, as the one which must be restored, after decoding, for display) is given, for example by the following sequence: B₋₁ B₀ I₁ B₂ B₃ P₄ B₅ B₆ P₇ B₈ B₉ P₁₀ B₁₁ B₁₂ ..., the order of transmission is modified in order that the pictures I and P for interpolating the pictures B are already present and decoded for restoring these pictures B. The modified order is as follows: I₁ B₋₁ B₀ P₄ B₂ B₃ P₇ B₅ B₆ P₁₀ B₈ B₉ I₁₃ ... (the pictures I₁ and P₄ are present before the pictures B₂ and B₃ of which they permit the determination and similarly for the pictures P₄ and P₇ before the pictures B₅ B₆, etc. ...).

These coded input data are applied to the memory 110 which is a part of the storage sub-assembly 20 and in this case is of the FIFO type (First In, First Out: the data written first are also read first). Fig. 4 is a temporal diagram showing, for each picture, the process of storage in this FIFO memory (the picture whose storage takes place is signalized at the end of the slope illustrating the progression of this storage operation). Each picture may then be decoded. To satisfy the MPEG standard requirements for bitrate control, all the data relating to a picture should theoretically be present in the memory at the instant when the decoder treats this image. This is illustrated in Fig. 5 which shows the temporal position of decoding, picture by picture, with respect to storage of the same pictures in the FIFO memory (decoding does not start until storage is terminated).

Chronologically, the detailed process of storing and displaying the picture during decoding for the group of pictures chosen as an example, is as follows. The intra picture I₁ (i.e., successively all its macroblocks) is decoded and then oriented for storage in the first reference memory (in which it is preserved until another decoded picture succeeds it, i.e. in this case during a period which is equal to six picture periods), as indicated in Fig. 6 which shows the contents of this memory (Fig. 7 shows the contents of the other reference memory). With the picture I₁ thus being decoded and stored, two picture periods pass during which the two pictures of type B are interpolated in the order of transmission and/or storage in accordance with the picture I₁, but which would be preceded by the picture I₁ in the natural order of the original pictures and can thus be denoted as B₋₁ and B₀. These pictures B₋₁ and B₀ are immediately stored in the display memory for successive field-by-field display (the odd and even frames are denoted "o" and "e", respectively). Figs. 8 and 9 show the contents of the display memory and the display chronology, respectively.

It will be noted that the display is shifted by one field with respect to storage in the display memory. After one field period (half a period of the picture) the information of the odd lines, i.e. of the odd field is entirely available in the display memory and this odd field may be displayed. This information of the odd lines is no longer useful and the space thus emptied in the memory permits storage of the information of the even lines. With an appropriate synchronization of decoding and display it is thus a single field at a time which must be stored in the display memory for the pictures B. For various reasons (higher capacity necessary for the last line of macroblocks; greater complexity of the address generator with respect to the case where two fields would be stored; storage of the whole chrominance picture, i.e. 228 lines rather than one field only), the necessary space in the memory for storing the pictures B is actually a bit larger, of the order of 4 Mbits.

When the decoding (by means of bidirectional interpolation) of the pictures B₋₁ and B₀ is terminated, the decoding of picture P₄ will succeed it in the order of transmission and/or storage. This picture P₄ is decoded and then oriented towards the second reference memory (in which it will also be preserved until another decoded picture succeeds it six picture periods later) as indicated with reference to Fig. 7. As previously for the pictures B₋₁ and B₀, the pictures P₄ and I₁ will then permit interpolation of the pictures B₂ and B₃ which follow P₄ in the order of transmission and/or storage. These pictures B₂ and B₃ are stored in the display memory for successive display (field by field). Between the display of the pictures B₋₁, B₀ and that of the pictures B₂ and B₃, the picture I₁ has been displayed by reading the first reference memory so as to restore the natural order of the pictures corresponding to the order of the original pictures and, after this display of B₂ and B₃, the picture P₄ is displayed. The decoding process is then continued in the same manner as hereinbefore, in the order of transmission and/or storage (P₇; B₅ and B₆ from P₄ and P₇; P₁₀; B₈ and B₉ from P₇ and P₁₀; etc. ...) and the display is continued likewise, in the natural order of the original pictures (B₅, B₆, P₇, B₈, B₉, P₁₀, etc. ...).

With this control of the memory being described, Fig. 10 shows in a corresponding manner the time limitations of communication (i.e. of the memory bandwidth) during the various decoding steps, and in the most unfavourable situation (as has been shown, the useful bandwidth is varying in accordance with the macroblocks, those of the type I by using fewer than those which are predicted), i.e. in the case where all the macroblocks are predicted (in principle, any decoder architecture should meet the most unfavourable situations in the matter of processing power). In this Fig. 10, the indications on each line "a" to "o" are either a sequence of pictures (lines a, b, e, g, h, i, j, k, l) or references of the bandwidth in Mbit/second (lines c to n). Line by line, these indications are:
(a) pictures to be decoded (they are presented in the order of transmission and/or storage);
(b) pictures displayed in their natural order (and, as stated above, with a temporal shift of one field with respect to the decoded pictures);
(c) rate of access to the input memory 110, with pictures I, P or B comprising 2, 1 or 0.5 Mbit of information respectively, divided equally throughout the picture;
(d) rate of information components between this memory 110 and the decoding circuit 120 (the largest number of bits is associated with the transmitted pictures I and the smallest number of bits is associated with the pictures B);
(e) transfer of decoded chrominance information components from the decoding circuit 120 to the memory of the display device 12, referred to as display memory (i.e. 8 x 8 x 1620 x 2 x 25 x 8 bits/sec);
(f) and (g) motion compensation beforehand and afterwards, respectively, for the chrominance components (9 x 9 x 1620 x 2 x 25 x 8 bits/sec);
(h) from the display memory, display of these information components corresponding to the chrominance components;
(i) to (l) as for the chrominance (steps e to h) these steps i to l correspond respectively to the transfer of decoded luminance information components from the circuit 120 to the display memory (16 x 16 x 1620 x 2 x 25 x 8 bits/sec), to the motion compensations beforehand and afterwards (18 x 18 x 1620 x 2 x 25 x 8 bits/sec), and to the display of these luminance information components (16 x 16 x 1620 x 2 x 25 x 8 bits/sec);
(m) transfer of various other information components such as headers, etc. (also divided throughout the pictures);
(n) passband roughly necessary for each picture, taking various preceding operations into account,
(o) representation of the corresponding memory access time for each picture with the average of this access time being shown in a broken line.

After the description of an MPEG decoder of the conventional type, the description of the invention will now follow. The principle of the invention is no longer to store the decoded information components relating to pictures B in the display memory, but to decode the coded information components corresponding to these pictures exactly at the instant when the resultant decoded information components must be available for display, in accordance with a principle referred to as decoding-on-the-fly. This decoding method according to the invention will hereinafter be described with reference to several variants.

In a first embodiment, the decoding method is a direct method. As has been stated, the signals to be decoded correspond to pictures of the type I, P or B and they are arranged in macroblocks comprising four luminance blocks and two chrominance blocks and, prior to decoding to which they are submitted, they are transmitted and/or stored in the form of digital signals regrouping the signals defining the parameters of each macroblock and the useful signals. Said definition signals comprise for each macroblock the header of the macroblock, its address, the associated motion vector(s), the quantization step, the prediction value of the DC coefficient of each block of the macroblock, etc., as well as information about the length of each block. The useful signals are all the other signals, i.e. the signals which correspond to the pixels and which have been obtained by a transform from the spatial domain to the frequency domain (in general, a discrete cosine transform), followed by a quantization and a variable-length coding.

The method of direct decoding, which comprises, in series and in a traditional way, a step of decoding coded video signals, a step of storing the signals thus decoded and a step of displaying these signals at the field frequency is modified, according to the invention, in the following way as far as the signals relating to the luminance and chrominance of each macroblock of the type B are concerned. The step of decoding and the step of display are subdivided into two sub-steps of decoding signals corresponding to each field and into two sub-steps of displaying these fields, and each of these sub-steps of decoding a field immediately precedes each sub-step of displaying this field and is effected at the same rate, without any buffer storage during the storage step which precedes the display step. With this absence of storage in the display memory, the operation can be termed as "decoding-on-the-fly".

In this example it should be noted that the coded signals contain the information components relating to two fields for each macroblock. In order that the decoding-on-the-fly is possible, each macroblock should thus be decoded twice, a first time just before displaying the odd field and a second time just before displaying the even field. This requirement implies that the internal decoding operation is performed at a higher rhythm (34 MHz instead of 16 MHz for an MPEG decoding operation of the conventional type), and that the stream of input signals is preserved for a longer period (a supplementary picture period) in the input memory 110. This storage requirement corresponds to 40 ms x 16 Mbits/second, i.e. 600 kbits. The economy of space in the memory, which would be approximately 4 Mbits in that, according to the invention, storage of the information components of type B is avoided, is thus actually corrected for a value which is slightly lower, i.e. of the order of 3.2 Mbits, but remains interesting.

In a variant of this method, it may be envisaged to include the conversion of the format of macroblocks into the video display format in the decoding step itself so as to maintain the memory bandwidth within practical limits. Such an internal conversion only requires 92 kbits in this case (corresponding to eight field lines for the luminance and eight picture lines for the chrominance).

In another embodiment, the method of decoding-on-the-fly according to the invention may be carried out in the following manner. The step of decoding the coded video signals is subdivided into two decoding sub-steps:
(a) the first sub-step allows decoding of the definition signals associated with the macroblocks (always of the type B) at the nominal frequency (the picture frequency) and for each of these macroblocks;
(b) the second sub-step is provided for decoding the useful signals, without buffer storage, at the display frequency (the field frequency) and for each of these macroblocks.

The definition signals decoded during the first decoding sub-step are temporarily stored in an external memory region referred to as auxiliary memory throughout the following description. The second sub-step is a sub-step of decoding-on-the-fly, at the display rate, of the useful signals of the type B macroblocks (actually, all the essential parameters for defining these macroblocks will be stored in the auxiliary memory during the first step, and thus only the signals obtained from the transform of the spatial domain into the frequency domain (here the coefficients other than the DC coefficient obtained by discrete cosine transform) remain to be decoded by means of variable-length decoding.

It should be noted that, since the lengths of each block are known, these variable-length decoding operations may be perfectly performed in parallel, for example by a parallel arrangement of two variable-length decoding circuits, one circuit acting on the start of a line of macroblocks and the other acting on the middle of this line. In all cases, the motion compensation is effected during this second step on the basis of motion vectors which, forming part of the definition signals, have been stored in the auxiliary memory during the first step.

In this embodiment of the decoding method according to the invention (decoding in two successive sub-steps at the nominal rate and at the display rate, respectively), Fig. 11 shows the restrictions of the bandwidth in the course of the decoding process, here again in the most unfavourable situation. This most unfavourable situation corresponds to the case where all the macroblocks of a picture B must be interpolated by means of bidirectional frame prediction and with a definition of the motion vector to half a pixel (which implies reading 17 x 17 pixels for a block of 8 x 8 pixels). As in Fig. 10, the indications on each line correspond either to a sequence of pictures (lines a, e, h, i, j, k) or to references of the memory bandwidth (b to d, and f to m) and are, line by line, as follows:
(a) position of the pictures to be decoded;
(b) rate of access to the input memory 110;
(c) rate of information between this memory 110 and the decoding circuit 120 for performing the first decoding sub-step, with pictures I, P or B comprising 2, 1 or 0,5 Mbit of information respectively, divided equally throughout the picture ;
(d) rate of access of the signals defining the macroblock to the auxiliary memory;
(e) position of the pictures during the second decoding sub-step;
(f) rate of information between the memory 110 and the decoding circuit 120 for performing the second decoding sub-step, with pictures I, P or B comprising 2, 1 or 0,5 Mbit of information respectively, divided equally throughout the picture;
(g) rate of information during reading of the contents of the auxiliary memory at the instant of the second decoding sub-step and immediate display of the data thus decoded on the fly (the rate for I and P pictures is also indicated : 10 Mbits/sec) ;
(h) and (i) motion compensation beforehand and afterwards for the luminance and chrominance information components (the numbers of 160 Mbits/sec and 342 Mbits/sec are obtained as follows: 160 = 18 x 18 x 1620 x 12 x 25; 342 = 18 x 18 x 1620 x 12 x 50 x 625/576);
(j) storage of the luminance and chrominance information components obtained during the first decoding sub-step (125 Mbits/sec = 16 x 16 x 1620 x 12 x 25);
(k) reading these luminance and chrominance information components with a view to their display;
(l) transfer of information such as headers, etc. (as for the line m in Fig. 10);
(m) memory bandwidth roughly necessary for each picture, taking the various previous operations into account, with an indication of the average of these values for a group of pictures.

An alternative to the method described hereinbefore is to decode on the fly for the luminance signals only. The chrominance signals will then be treated in the conventional manner. In this third embodiment of the method according to the invention, the economy of the memory capacity is less than in the previous embodiment (of the order of 1.2 Mbit), but remains advantageous. Fig. 12 shows the new restrictions of the bandwidth in this case, with indications on each line always corresponding either to a sequence of pictures (lines a, e, f, g, j, k, l, m) or to references of the memory bandwidth (lines b to p):
(a) pictures to be decoded;
(b) rate of access to the input memory 110;
(c) rate of information between this memory 110 and the decoding circuit 120 for performing the first decoding sub-step;
(d) rate of access of the signals defining the macroblock to the auxiliary memory;
(e) conventional decoding of the chrominance information components during the first decoding sub-step;
(f) and (g) motion compensation beforehand and afterwards, respectively, for the chrominance information components (53 Mbits/sec = 9 x 9 x 2 x 1620 x 25 x 8);
(h) display of the chrominance information components (42 Mbits/sec = 8 x 8 x 2 x 1620 x 25 x 8);
(i) rate of information between the memory 110 and the decoding circuit 120 for performing the second decoding sub-step;
(j) rate of information during reading of the contents of the auxiliary memory at the instant of the second decoding sub-step and immediate display of the data thus decoded on the fly;
(k) and (l) motion compensation beforehand and afterwards, respectively, for the luminance information components (105 Mbits/sec = 18 x 18 x 1620 x 8 x 25; 228 Mbits/sec = 18 x 18 x 1620 x 8 x 50 x 625/576);
(m) storage of the luminance information components obtained during the first decoding sub-step (84 Mbits/sec = 16 x 16 x 1620 x 8 x 25);
(n) reading these luminance information components with a view to their display (91 Mbits/sec = 16 x 16 x 1620 x 8 x 25 x 625/576);
(o) transfer of information such as headers, etc. (similarly as for the line m of Fig. 10 or the line 1 of Fig. 11);
(p) memory bandwidth roughly necessary for each picture, taking the various previous operations into account, with an indication of the average of these values for a group of pictures.

The invention is not limited to the embodiments described and illustrated hereinbefore, but other variants based on these embodiments may be proposed. Particularly in the latter embodiment it is alternatively possible to perform the operation of converting the macroblock format into the video display format in the internal memory of the decoding circuit instead of in the external memory. A gain in space in the internal memory may also be obtained in the following case. It is known that, before the variable-length decoding operation on the signals to be decoded, operations of transforming the original signals from the spatial domain to the frequency domain and subsequently of quantization are performed it must be understood : at the coding side, in the encoder, before obtaining the coded signals to be decoded. The coefficients thus obtained as substitutes for signals before transform are regrouped into blocks in the macroblocks. Fig. 13 shows the four luminance blocks of a macroblock and illustrates the principle of format conversion required before display. The internal memory space for this conversion may be divided by two if said blocks are not decoded in accordance with the order of transmission, but differently, in the order of lines to be displayed per field. Dependent on whether the field to be decoded is the odd field or the even field, and dependent on the type of coding (field or frame coding) of the macroblock and of the lines to be displayed (the four upper lines or the four lower lines), only the two upper blocks (0 and 1 in Fig. 13) or only the two lower blocks (2 and 3 in Fig. 13) are preserved, while the DC coefficient and the length of each block are in any case available in the auxiliary memory.

Another variant is to generalize the decoding method into two sub-steps according to the invention to the pictures I and P. As has been seen, the decoding on the fly of the macroblocks of type B provides a free memory capacity for supplementary operations. By applying this decoding principle also to the macroblocks of the pictures I and P, the presence of high peaks occurring in the processing operation and in the values of the memory bandwidth is avoided. It is sufficient to perform this operation at the nominal rate this time, because the information components of the type I and P are not required to be used immediately for motion compensation and/or display. In the variant thus proposed, the operation is modified with respect to that described with reference to Figs. 3 to 9, and Figs. 14 to 21 show the new corresponding diagrams as follows:
Fig. 14, which is identical to Fig. 3, shows the stream of input data per picture;
Fig. 15 illustrates the realisation of the first decoding sub-step applied to each picture I, P, B in this case;
Fig. 16 shows, picture by picture, the process of storage in the FIFO memory and shows, in comparison with Fig. 4, the lengthening of each storage period due to the supplementary delay of storage of the decoded definition signals of each macroblock in the auxiliary memory;
Fig. 17 illustrates the realisation of the second decoding sub-step;
Figs. 18 to 20 show the contents of the auxiliary memory (definition signals associated with each macroblock) and of the two reference memories;
Fig. 21 represents the sequence of restored and displayed pictures in their natural order corresponding to the order they had in the original sequence before coding.

It should be noted that the invention not only relates to the method described hereinbefore in its various embodiments, but also to any system for carrying out this method. In this respect it is to be noted that a preferred embodiment of such a device comprises a microprocessor with connections for performing the method described hereinbefore in one of the proposed variants under the control of a set of appropriate instructions. To this end, the system according to the invention for decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, comprises, as mentioned hereinbefore, a decoding sub-assembly 10 connected to a sub-assembly 20 for storing the signals thus decoded via a bus 30. According to the invention, the sub-assembly 10 consisting of a decoding device 11 and a device 12 for displaying the decoded signals at the field frequency comprises means for controlling the decoding and display operations, by which means these two operations can be subdivided into two decoding sub-steps and two display sub-steps, one for each field. Each of the sub-steps for decoding a field is then performed just before the corresponding sub-step for displaying the same field, by which any storage of decoded information is avoided. This subdivision and this decoding-on-the-fly only relates to luminance signals, or also to chrominance signals and in the preferred embodiment these embodiments are only used for the macroblocks of type B. However, it is possible to use the same process for macroblocks of type-I pictures and/or for macroblocks of type-P pictures.

It is also possible to provide other embodiments for the means for controlling the display and decoding operations, with which means, for example, the single operation of decoding can be divided into two decoding sub-steps, the first sub-step only ensuring only the decoding of definition signals of the macroblocks at the nominal frequency (the frame frequency) and the second sub-step only relating to decoding the useful signals of these macroblocks, this time at the display frequency (the field frequency). This second solution has the advantage that decoding can be performed more rapidly. For decoding useful signals of each line of macroblocks, it is possible to provide two decoding circuits instead of one, each operating in parallel for decoding half the line of macroblocks (one circuit decoding from the start of this line and the other decoding from the middle).

As has been apparent from the description of the method according to the invention, the operation of converting the format of the macroblocks into the display format may not be performed in the external memory in the sub-assembly 20 but within the decoding sub-assembly at the end of the decoding operation. In this case the memory space restrictions may be reduced if, as has also been apparent hereinbefore, the blocks of a macroblock are not decoded in the order of transmission, but differently (either the blocks 0 and 1, or the blocks 2 and 3) in accordance with that of the fields in the course of the decoding process.

The method and system according to the invention thus provide an economy of memory space and memory bandwidth. If the definition signals of the macroblocks represent 256 bits per macroblock, with 1620 macroblocks per picture, it is thus necessary in the embodiments described hereinbefore to provide the external memory for the region referred to as auxiliary memory with a memory space of 256 x 1620 = 414 kbits which may be adjusted to 400 kbits because in reality not all macroblocks are coded. The global restrictions of the memory are thus as follows:
- input buffer memory: 3.1 Mbits;
- the two reference memories: 5 Mbits each;
- display memory: 1.6 Mbit (if the method according to the invention only concerns the luminance component) or 0 (if the method concerns the luminance and chrominance components);
- auxiliary memory: approximately 0.4 Mbit; which leads to a global occupation of 13.5 or 15.1 Mbits dependent on whether the chrominance is included in the processing operation according to the invention. For an external memory size of 2²⁴ = 16.8 Mbits, the space now left free in the memory thanks to implementation of the method according to the invention is thus approximately 1.7 Mbit if the invention relates to the luminance component only and 3.3 Mbits if the invention also relates to the chrominance component. This result applies to the systems processing 625 lines/50 Hz picture sequences. In the case of 525 lines/60 Hz systems, the reference memories do not occupy more than 4.2 Mbits instead of 5, which now increases the above-mentioned values to 3.3 Mbits and 4.9 Mbits, respectively. It will be noted that the number of 3.1 Mbits for the input buffer memory capacity corresponds to the most unfavourable situation and that in practice this value will be a bit lower, which extends the free space in the memory in this case as well.

Finally it should also be noted that the invention relates to any video reception equipment comprising a decoding system as described above particularly adapted to process MPEG coded video signals or implementing a decoding method in which the decoding and display steps or sub-steps, as described above, are provided for processing MPEG coded video signals.

## Claims

1. A method of decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said method comprising, in series, a step of decoding said coded video signals, a step of storing signals thus decoded and a step of displaying said signals at the field frequency, **characterized in that** for the signals relating to the luminance of each macroblock of type B, said decoding and display steps are subdivided into two sub-steps of decoding signals corresponding to each field and into two sub-steps of displaying said fields, and **in that** each sub-step of decoding a field immediately precedes each sub-step of displaying said field and, with a view to on-the-fly-decoding of said type-B macroblocks, is effected at the same rate as said sub-step of displaying said field, without any buffer storage during said storage step.

2. A method of decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said method comprising, in series, a step of decoding said coded video signals, a step of storing signals thus decoded and a step of displaying said signals at the field frequency, **characterized in that** for the signals relating to the luminance of each macroblock of type B, the decoding step is subdivided into two decoding sub-steps, a first sub-step for decoding, at the frame frequency, said definition signals associated with said macroblocks, and a second sub-step for decoding said useful signals of said macroblocks at the field frequency, said second decoding sub-step immediately preceding the step of displaying macroblocks of type B and, with a view to on-the-fly-decoding of said type-B macroblocks, being effected at the same rate as said step of displaying macroblocks of type B, without any buffer storage of said useful signals during said storage step.

3. A decoding method as claimed in Claim 2, **characterized in that** the second decoding sub-step is subdivided into two parallel operations of variable-length decoding each macroblock line to ensure parallel decoding of one half of each macroblock line.

4. A decoding method as claimed in any one of Claims 1 to 3, **characterized in that** said decoding-on-the-fly also concerns the signals relating to the chrominance of each macroblock of type B.

5. A decoding method as claimed in any one of Claims 1 to 4, **characterized in that** said decoding step includes a step of converting the format of the macroblocks into a video display format.

6. A decoding method as claimed in any one of Claims 1 to 5, in which the decoding step on the signals to be decoded has been preceded, at the coding side by a step of transforming the original signals from the spatial domain to the frequency domain, **characterized in that** the blocks of a macroblock are decoded in the order of lines to be successively displayed for each field.

7. A decoding method as claimed in any one of Claims 1 to 6, **characterized in that** said decoding and display steps or sub-steps are provided for processing MPEG coded video signals.

8. A system for decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said system comprising a decoding sub-assembly connected to a sub-assembly for storing signals thus decoded via a bus and consisting of a decoding device and a device for displaying the decoded signals at the field frequency, **characterized in that** for decoding and displaying the signals relating to the luminance and possibly to the chrominance of each macroblock of type B, said system comprises means for subdividing said two operations into two sub-steps of decoding signals corresponding to each field and into two sub-steps of displaying said fields, each sub-step of decoding a field being performed immediately before the corresponding sub-step of displaying said field and, with a view to on-the-fly-decoding of said type-B macroblocks, at the same rate as said sub-step of displaying said field, without any buffer storage.

9. A system for decoding coded video signals which result from series coding macroblocks of pictures consisting of two interlaced fields, each macroblock comprising luminance blocks and chrominance blocks, and have been transmitted and/or stored in the form of digital signals which regroup the signals defining parameters of each macroblock and the useful signals associated with each pixel of each macroblock and correspond to sequential pictures of type I, P or B, respectively, dependent on whether said pictures are coded without reference to another picture of the sequence or are composed of macroblocks, the majority of which is predicted by means of unidirectional motion compensation based on an I or P picture, or of macroblocks, the majority of which is interpolated by means of bidirectional motion compensation based on I and/or P previous and subsequent pictures, said system comprising a decoding sub-assembly connected to a sub-assembly for storing signals thus decoded via a bus and consisting of a decoding device and a device for displaying the decoded signals at the field frequency, **characterized in that** for decoding and displaying the signals relating to the luminance and possibly to the chrominance of each macroblock of type B, said system comprises means for subdividing the decoding operation into two decoding sub-steps, a first sub-step for decoding, at the frame frequency, said definition signals associated with said macroblocks, and a second sub-step for decoding said useful signals of said macroblocks at the field frequency, said second decoding sub-step immediately preceding the step of displaying macroblocks of type B and, with a view to on-the-fly-decoding of said type-B macroblocks, being effected at the same rate as said step of displaying macroblocks of type B, without any buffer storage of said useful signals.

10. A decoding system as claimed in Claim 9, **characterized in that** said sub-dividing means are provided for subdividing the second decoding sub-step into two variable-length decoding operations ensuring parallel decoding of one half of each macroblock line.

11. A video reception equipment including a decoding system as claimed in any one of Claims 8 to 10, **characterized in that** said decoding system is provided for processing MPEG coded video signals.

## Patentansprüche

1. Verfahren zur Decodierung codierter Videosignale, die herrühren aus Reihen von Codierungsmakroblöcken von Bildern, bestehend aus zwei zeilenversprungenen Teilbildern, wobei jeder Makroblock Leuchtdichteblöcke und Farbartblöcke umfasst, und die in Form digitaler Signale übertragen und/oder gespeichert worden sind, welche die Signale neu gruppieren, die Parameter jedes Makroblocks definieren und die nützlichen Signale, die jedem Pixel jedes Makroblocks zugeordnet sind und die aufeinander folgenden Bildern vom Typ I, P bzw. B entsprechen, und zwar abhängig davon, ob die genannten Bilder ohne Bezugnahme auf ein anderes Bild der Folge oder aus Makroblöcken zusammengesetzt sind, wobei die Mehrzahl derselben mit Hilfe von Einrichtungs-Bewegungskompensation vorhergesagt wird, und zwar auf Basis eines I- oder eines P-Bildes, oder aus Makroblöcken, wobei die Mehrzahl derselben mit Hilfe von Zweirichtungen-Bewegungskompensation interpoliert wird, und zwar auf Basis von I und/oder P vorhergehenden und nachfolgenden Bildern, wobei dieses Verfahren in Reihe einen Decodierschritt der genannten codierten Videosignale, einen Schritt zum Speichern der auf diese Art und Weise decodierten Signale und einen Schritt zum Wiedergaben der genannten Signale mit der Teilbildfrequenz umfasst, **dadurch gekennzeichnet, dass** für die Signale, die sich auf die Leuchtdichte jedes Makroblocks vom Typ B beziehen, die genannten Decodierungs- und Wiedergabeschritte in zwei Teilschritte von Decodiersignalen aufgeteilt sind, die jedem Teilbild entsprechen und in zwei Teilschritte der Wiedergabe der genannten Teilbilder, und dass jeder Teilschritt der Decodierung eines Teilbildes unmittelbar vor jedem Teilschritt der Wiedergabe des genannten Teilbildes liegt und im Hinblick auf die "in-dem-Flug-Decodierung der genannten Makroblöcke vom Typ B mit derselben Rate wie der genannte Teilschritt der Wiedergabe des genannten Teilbildes, ohne jegliche Pufferspeicherung während des genannten Speicherschrittes durchgeführt wird.

2. Verfahren zur Decodierung codierter Videosignale, die von Reihen Codierungsmakroblöcken von Bildern herrühren, die aus zwei Teilbildern bestehen, wobei jeder Makroblock Leuchtduchteblöcke und Farbartblöcke umfasst und die in Form digitaler Signale übertragen und/oder gespeichert worden sind, welche diejenigen Signale neu gruppieren, die Parameter jedes Makroblocks definieren und die nützlichen Signale, die jedem Pixel jedes Makroblocks zugeordnet sind und den sequentiellen Bildern vom Typ I, P bzw. B entsprechen, abhängig davon, ob die genannten Bilder ohne Bezugnahme auf ein anderes Bild der Sequenz codiert sind oder aus Makroblöcken zusammengesetzt sind, wobei der Hauptteil derselben mit Hilfe von Einrichtungsbewegungskompensation auf Basis eines I-oder eines P-Bildes vorhergesagt wird, oder aus Makroblöcken, wobei der Hauptteil derselben mit Hilfe von Zweirichtungenbewegungskompensation auf Basis von vorhergehenden und nachfolgenden I- und/oder P-Bildern vorhergesagt wird, wobei das genannte Verfahren in Reihe einen Schritt zum Decodieren der genannten codierten Videosignale, einen Schritt zum Speichern der auf diese Art und Weise decodierten Signale und einen Schritt zum Wiedergaben der genannten Signale mit der Teilbildfrequenz umfasst, **dadurch gekennzeichnet, dass** für die Signale, die sich auf die Leuchtdichte jedes Makroblocks vom Typ B beziehen, der genannte Decodierungsschritt in zwei Decodierungs-Hilfsschritte aufgeteilt wird, und zwar einen ersten Hilfsschritt zum mit der Bildfrequenz Decodieren der genannten den genannten Makroblöcken zugeordneten Definitionssignale, und einen zweiten Hilfsschritt zum Decodieren der genannten nützlichen Signale der genannten Makroblöcke mit der Teilbildfrequenz, wobei der genannte zweite Decodierungsschritt dem Schritt der Wiedergabe von Makroblöcken vom Typ B unmittelbar vorhergeht, und im Hinblick auf die "in-dem-Flug"-Decodierung der genannten Makroblöcke vom Typ B, mit derselben Rate durchgeführt werden wie der genannte Schritt der Wiedergabe von Makroblöcken vom Typ B, ohne jegliche Pufferspeicherung der genannten nützlichen Signale während des genannten Speicherschrittes.

3. Decodierungsverfahren nach Anspruch 2, **dadurch gekennzeichnet, dass** der zweite Decodierungshilfsschritt in zwei parallele Vorgänge der Decodierung mit varibaler Länge jeder Makroblockzeile zur Gewährleistung einer parallelen Decodierung einer Hälfte jeder Makroblockzeile.

4. Decodierungsverfahren nach einem der Ansprüche 1 bis 3, **dadurch gekennzeichnet, dass** dieses Decodieren-im-Flug ebenfalls die Signale betrifft, die sich auf die Farbart jedes Makroblocks vom Typ B beziehen.

5. Decodierungsverfahren nach einem der Ansprüche 1 bis 4, **dadurch gekennzeichnet, dass** der genannte Decodierungsschritt einen Schritt zum Umwandeln des Formats der Makroblöcke in ein Video-Wiedergabeformat umfasst.

6. Decodierungsverfahren nach einem der Ansprüche 1 bis 5, wobei dem Decodierungsschritt an den zu decodierenden Signalen an der Codierungsseite ein Schritt zum Transformieren der ursprünglichen Signale vorhergeht, und zwar aus der räumlichen Domäne in die Frequenzdomäne, **dadurch gekennzeichnet, dass** die Blöcke eines Makroblocks in der Reihenfolge der nacheinander für jedes Teilbild wiederzugebenden Zeilen decodiert werden.

7. Decodierungsverfahren nach einem der Ansprüche 1 bis 6, **dadurch gekennzeichnet, dass** die genannten Decodierungs- und Wiedergabeschritte oder -teilschritte zum Verarbeiten von MPEG-codierten Videosignale vorgesehen sind.

8. System zum Decodieren codierter Videosignale, die aus Reihen von Codierungsmakroblöcken von Bildern herrühren, die aus zwei zeilenversprungenen Teilbildern bestehen, wobei jeder Makroblock Leuchtdichteblöcke und Farbartblöcke aufweist, und die übertragen und/oder gespeichert worden sind, und zwar in Form digitaler Signale, welche die Signale definierenden Parameter jedes Makroblocks neu gruppieren und die nützlichen Signale, die jedem Pixel jedes Makroblocks zugeordnet sind und sequentiellen Bildern vom Typ I, P oder B entsprechen, je nachdem, ob die genannten Bilder ohne Bezugnahme auf ein anderes Bild der Sequenz codiert werden oder aus Makroblöcken zusammengesetzt sind, wobei der Hauptteil derselben mit Hilfe von Einrichtungsbewegungskompensation auf Basis von einem I- oder einem P-Bild oder von Makroblöcken vorhergesagt wird, wobei der Hauptteil derselben mit Hilfe von Zweirichtungenbewegungskompensation auf Basis von vorhergehenden und nachfolgenden I- und/oder P- Bildern interpoliert wird, wobei das genannte System eine Decodierungs-Hilfsanordnung umfasst, die mit einer Hilfsanordnung verbunden ist zur Speicherung von Signalen, die auf diese Art und Weise decodiert sind über einen Bus und bestehend aus einer Decodierungsanordnung und einer Anordnung zum Wiedergeben der genannten Signale mit der Teilbildfrequenz, **dadurch gekennzeichnet, dass** zum Decodieren und Wiedergeben der Signale, die sich auf die Leuchtdichte und möglicherweise auf die Farbart jedes Makroblocks vom Typ B beziehen, das genannte System Mittel aufweist zum Unterteilen der genannten zwei Vorgänge in zwei Hilfsschritte zum Decodieren von Signalen entsprechend jedem Teilbild und in zwei Hilfsschritte zum Wiedergeben der genannten Teilbilder, wobei jeder Hilfsschritt zum Decodieren eines Teilbildes unmittelbar vor dem entsprechenden Hilfsschritt der Wiedergabe des genannten Teilbildes durchgeführt wird und, im Hinblick auf die im-Flug-Decodierung der genannten Makroblöcke vom Typ B, mit derselben Rate wie der genannte Hilfsschritt der Wiedergabe des genannten Teilbildes ohne jegliche Pufferspeicherung.

9. System zum Decodieren codierter Videosignale, die von Reihen von Codierungsmakroblöcken von Bildern herrühren, die aus zwei zeilenversprungenen Teilbildern bestehen, wobei jeder Makroblock Leuchtdichteblöcke und Farbartblöcke aufweist, und die übertragen und/oder gespeichert worden sind, und zwar in Form digitaler Signale, welche die Signale definierenden Parameter jedes Makroblocks neu gruppieren und die nützlichen Signale, die jedem Pixel jedes Makroblocks zugeordnet sind und sequentiellen Bildern vom Typ I, P oder B entsprechen, je nachdem, ob die genannten Bilder ohne Bezugnahme auf ein anderes Bild der Sequenz codiert werden oder aus Makroblöcken zusammengesetzt sind, wobei der Hauptteil derselben mit Hilfe von Einrichtungsbewegungskompensation auf Basis von einem I- oder einem P-Bild oder von Makroblöcken vorhergesagt wird, wobei der Hauptteil derselben mit Hilfe von Zweirichtungenbewegungskompensation auf Basis von vorhergehenden und nachfolgenden I- und/oder P-Bildern interpoliert wird, wobei das genannte System eine Decodierungs-Hilfsanordnung umfasst, die mit einer Hilfsanordnung verbunden ist zur Speicherung von Signalen, die auf diese Art und Weise decodiert sind über einen Bus und bestehend aus einer Decodierungsanordnung und einer Anordnung zum Wiedergeben der genannten Signale mit der Teilbildfrequenz, **dadurch gekennzeichnet, dass** zum Decodieren und Wiedergeben der Signale, die sich auf die Leuchtdichte und möglicherweise auf die Farbart jedes Makroblocks vom Typ B beziehen, das genannte System Mittel aufweist zum Unterteilen der genannten zwei Vorgänge in zwei Hilfsschritte zum Decodieren von Signalen entsprechend jedem Teilbild und in zwei Hilfsschritte zum Wiedergeben der genannten Teilbilder, wobei jeder Hilfsschritt zum Decodieren eines Teilbildes unmittelbar vor dem entsprechenden Hilfsschritt der Wiedergabe des genannten Teilbildes durchgeführt wird und, im Hinblick auf die im-Flug-Decodierung der genannten Makroblöcke vom Typ B, wie der genannte Hilfsschritt der Wiedergabe des genannten Teilbildes ohne jegliche Pufferspeicherung.

10. Decodierungssystem nach Anspruch 9, **dadurch gekennzeichnet, dass** die genannten Unterteilungsmittel zum Unterteilen des zweiten Decodierungs-Hilfsschrittes in zwei Vorgänge zum Decodieren mit variabler Länge , wodurch eine parallele Decodierung einer Hälfte jeder Makroblockzeile gewährleistet ist.

11. Videoempfangsanordnung mit einem Decodierungssystem nach einem der Ansprüche 8 bis 10, **dadurch gekennzeichnet, dass** das genannte Decodierungssystem zum Verarbeiten von MPEG-codierten Videosignale vorgesehen ist.

## Revendications

1. Procédé de décodage de signaux vidéo codés qui proviennent d'un codage en série de macroblocs d'images vidéo comprenant deux trames entrelacées, chaque macrobloc comprenant des blocs de luminance et des blocs de chrominance, et qui ont été transmis et/ou stockés sous la forme de signaux numériques qui regroupent les signaux définissant des paramètres de chaque macrobloc et les signaux utiles associés à chaque pixel de chaque macrobloc et correspondent à des images vidéo successives de type I, P ou B respectivement, selon que lesdites images vidéo sont codées sans référence à une autre image vidéo de la séquence ou sont composées de macroblocs dont la majorité est prédite au moyen d'une compensation de mouvement unidirectionnelle sur la base d'une image vidéo I ou P, ou de macroblocs dont la majorité est interpolée au moyen d'une compensation de mouvement bidirectionnelle sur la base d'images vidéo I et/ou P précédente et suivante, ledit procédé comprenant, en série, une étape de décodage desdits signaux vidéo codés, une étape de stockage des signaux ainsi décodés et une étape d'affichage desdits signaux à la fréquence de trame, **caractérisé en ce que** pour les signaux concernant la luminance de chaque macrobloc de type B, lesdites étapes de décodage et d'affichage sont subdivisées en deux sous-étapes de décodage des signaux correspondant à chaque trame et en deux sous-étapes d'affichage desdites trames, et **en ce que** chaque sous-étape de décodage d'une trame précède immédiatement chaque sous-étape d'affichage de ladite trame et, en vue du décodage à la volée desdits macroblocs de type B, est effectuée à la même cadence que ladite sous-étape d'affichage de ladite trame, sans mémorisation intermédiaire durant ladite étape de stockage.

2. Procédé de décodage de signaux vidéo codés qui proviennent d'un codage en série de macroblocs d'images vidéo comprenant deux trames entrelacées, chaque macrobloc comprenant des blocs de luminance et des blocs de chrominance, et qui ont été transmis et/ou stockés sous la forme de signaux numériques qui regroupent les signaux définissant des paramètres de chaque macrobloc et les signaux utiles associés à chaque pixel de chaque macrobloc et correspondent à des images vidéo successives de type I, P ou B respectivement, selon que lesdites images vidéo sont codées sans référence à une autre image vidéo de la séquence ou sont composées de macroblocs dont la majorité est prédite au moyen d'une compensation de mouvement unidirectionnelle sur la base d'une image vidéo I ou P, ou de macroblocs dont la majorité est interpolée au moyen d'une compensation de mouvement bidirectionnelle sur la base d'images vidéo I et/ou P précédente et suivante, ledit procédé comprenant, en série, une étape de décodage desdits signaux vidéo codés, une étape de stockage des signaux ainsi décodés et une étape d'affichage desdits signaux à la fréquence de trame, **caractérisé en ce que** pour les signaux concernant la luminance de chaque macrobloc de type B, l'étape de décodage est subdivisée en deux sous-étapes de décodage, une première sous-étape pour décoder, à la fréquence d'image complète, lesdits signaux de définition associés auxdits macroblocs, et une deuxième sous-étape pour décoder lesdits signaux utiles desdits macroblocs à la fréquence de trame, ladite deuxième sous-étape de décodage précédant immédiatement l'étape d'affichage des macroblocs de type B et, en vue du décodage à la volée desdits macroblocs de type B, étant effectuée à la même cadence que ladite étape d'affichage des macroblocs de type B, sans mémorisation intermédiaire desdits signaux utiles durant ladite étape de stockage.

3. Procédé de décodage suivant la revendication 2, **caractérisé en ce que** la deuxième sous-étape de décodage est subdivisée en deux opérations parallèles de décodage à longueur variable de chaque ligne de macroblocs pour permettre un décodage parallèle d'une moitié de chaque ligne de macroblocs.

4. Procédé de décodage suivant l'une quelconque des revendications 1 à 3, **caractérisé en ce que** ledit décodage à la volée concerne également les signaux se rapportant à la chrominance de chaque macrobloc de type B.

5. Procédé de décodage suivant l'une quelconque des revendications 1 à 4, **caractérisé en ce que** ladite étape de décodage inclut une étape de conversion du format des macroblocs en un format d'affichage vidéo.

6. Procédé de décodage suivant l'une quelconque des revendications 1 à 5, dans lequel l'étape de décodage sur les signaux à décoder a été précédée, du côté codage, d'une étape de transformation des signaux d'origine du domaine spatial au domaine fréquentiel, **caractérisé en ce que** les blocs d'un macrobloc sont décodés dans l'ordre des lignes à afficher successivement pour chaque trame.

7. Procédé de décodage suivant l'une quelconque des revendications 1 à 6, **caractérisé en ce que** lesdites étapes ou sous-étapes de décodage et d'affichage sont prévues pour traiter des signaux vidéo codés MPEG.

8. Système pour décoder des signaux vidéo codés qui proviennent d'un codage en série de macroblocs d'images vidéo comprenant deux trames entrelacées, chaque macrobloc comprenant des blocs de luminance et des blocs de chrominance, et qui ont été transmis et/ou stockés sous la forme de signaux numériques qui regroupent les signaux définissant des paramètres de chaque macrobloc et les signaux utiles associés à chaque pixel de chaque macrobloc et correspondent à des images vidéo successives de type I, P ou B respectivement, selon que lesdites images vidéo sont codées sans référence à une autre image vidéo de la séquence ou sont composées de macroblocs dont la majorité est prédite au moyen d'une compensation de mouvement unidirectionnelle sur la base d'une image vidéo I ou P, ou de macroblocs dont la majorité est interpolée au moyen d'une compensation de mouvement bidirectionnelle sur la base d'images vidéo I et/ou P précédente et suivante, ledit système comprenant un sous-ensemble de décodage connecté à un sous-ensemble pour stocker les signaux ainsi décodés par le biais d'un bus et comprenant un dispositif de décodage et un dispositif pour afficher lesdits signaux décodés à la fréquence de trame, **caractérisé en ce que** pour le décodage et l'affichage des signaux concernant la luminance et éventuellement la chrominance de chaque macrobloc de type B, ledit système comprend des moyens pour subdiviser lesdites deux opérations en deux sous-étapes de décodage des signaux correspondant à chaque trame et en deux sous-étapes d'affichage desdites trames, chaque sous-étape de décodage d'une trame étant effectuée immédiatement avant la sous-étape correspondante d'affichage de ladite trame et, en vue du décodage à la volée desdits macroblocs de type B, à la même cadence que ladite sous-étape d'affichage de ladite trame sans mémorisation intermédiaire.

9. Système pour décoder des signaux vidéo codés qui proviennent d'un codage en série de macroblocs d'images vidéo comprenant deux trames entrelacées, chaque macrobloc comprenant des blocs de luminance et des blocs de chrominance, et qui ont été transmis et/ou stockés sous la forme de signaux numériques qui regroupent les signaux définissant des paramètres de chaque macrobloc et les signaux utiles associés à chaque pixel de chaque macrobloc et correspondent, à des images vidéo successives de type I, P ou B respectivement, selon que lesdites images vidéo sont codées sans référence à une autre image vidéo de la séquence ou sont composées de macroblocs dont la majorité est prédite au moyen d'une compensation de mouvement unidirectionnelle sur la base d'une image vidéo I ou P, ou de macroblocs dont la majorité est interpolée au moyen d'une compensation de mouvement bidirectionnelle sur la base d'images vidéo I et/ou P précédente et suivante, ledit système comprenant un sous-ensemble de décodage connecté à un sous-ensemble pour stocker les signaux ainsi décodés par le biais d'un bus et comprenant un dispositif pour décoder et un dispositif pour afficher lesdits signaux décodés à la fréquence de trame, **caractérisé en ce que** pour décoder et afficher les signaux concernant la luminance et éventuellement la chrominance de chaque macrobloc de type B, ledit système comprend des moyens pour subdiviser l'opération de décodage en deux sous-étapes de décodage, une première sous-étape pour décoder, à la même fréquence d'image, lesdits signaux de définition associés auxdits macroblocs, et une deuxième sous-étape pour décoder lesdits signaux utiles desdits macroblocs à la fréquence de trame, ladite deuxième sous-étape de décodage précédant immédiatement l'étape d'affichage des macroblocs de type B et, en vue d'un décodage à la volée desdits macroblocs de type B, étant effectuée à la même cadence que ladite étape d'affichage des macroblocs de type B, sans mémorisation intermédiaire desdits signaux utiles.

10. Système de décodage suivant la revendication 9, **caractérisé en ce que** lesdits moyens de subdivision sont prévus pour subdiviser la deuxième sous-étape de décodage en deux opérations de décodage à longueur variable permettant un décodage parallèle d'une moitié de chaque ligne de macroblocs.

11. Matériel de réception vidéo comprenant un système de décodage suivant l'une quelconque des revendications 8 à 10, **caractérisé en ce que** ledit système de décodage est prévu pour traiter des signaux vidéo codés MPEG.
